# FASCICULE DE BREVET EUROPEEN

(11) **EP 1 521 541 B1**
(45) Date de publication et mention de la délivrance du brevet: **07.12.2005**
(21) Numéro de dépôt: 03755591.9
(22) Date de dépôt: 11.07.2003
(51) Int. Cl.: A47J 31/06

(54) **MACHINE A CAFE FONCTIONNANT AVEC DES DOSES**
MIT EINZELPORTIONEN ARBEITENDEN KAFFEEMASCHINE
CARTRIDGE-OPERATED COFFEE-MACHINE

(30) Priorité: 12.07.2002 FR 0208789
(43) Date de publication de la demande: 13.04.2005
(73) Titulaire: SEB S.A., 69130 Ecully (FR)
(72) Inventeur: LAIGNEAU, Gilles, F-61250 Damigny (FR); JOUATEL, Christian, F-61250 Radon (FR)
(74) Mandataire: Kiehl, Hubert
(86) Numéro de dépôt international: PCT/FR2003/002189
(87) Numéro de publication internationale: WO 2004/006740

(56) Documents cités:
- EP-A- 0 125 215
- EP-A- 1 208 782
- US-A- 5 197 374

## Description

La présente invention est relative à un appareil de préparation de boissons chaudes à partir de doses préfabriquées de produits alimentaires solubles ou de percolation, tels le café moulu, le thé ou les poudres solubles.

Un appareil de préparation et distribution de boissons chaudes comprend généralement un réservoir d'eau froide, une pompe électrique, un ensemble formant chaudière et une tête d'infusion qui reçoit les doses en vue de leur injecter l'eau chaude en provenance de ladite chaudière, la boisson obtenue étant ensuite orientée vers un récipient collecteur.

Un appareil de ce type est décrit dans le document US 3 295 998, qui fonctionne avec des cartouches de café préfabriquées jetables, de format unique. Une telle cartouche, qui est initialement hermétiquement fermée en étant réalisée en une feuille métallique, est disposée dans la tête de distribution où ses parois supérieures et inférieures sont percées par des pointes coniques. Une première série de pointes laissent entrer l'eau d'infusion en partie supérieure, alors qu'une deuxième série de pointes perforent des orifices d'écoulement de la boisson en partie inférieure de la cartouche. Le problème rencontré avec un tel appareil est que, tout en étant complexe, il est limité à l'utilisation avec des capsules d'un seul format, par exemple avec des capsules de café moulu. Si l'on veut obtenir un autre type de boisson, par exemple une boisson à base de produit soluble, il faudrait alors utiliser une deuxième machine adaptée au fonctionnement avec ce nouveau format de capsule, ce deuxième ayant généralement des dimensions plus importantes que celui du café moulu, pour une même quantité de boisson obtenue dans le récipient collecteur.

Afin de pallier à ce problème, le document EP 0 125 215 décrit un groupe de distribution pour une machine distributrice de boissons chaudes apte à fonctionner avec des cartouches préconditionnées en plastique de deux formats différents. La chambre d'infusion du groupe d'infusion comprend un cylindre de chemisage pour accueillir, en sa partie supérieure, une cartouche de petit format qui est supportée à sa base par une tige interne audit cylindre. A l'intérieur du cylindre de chemisage est agencé un contre-cylindre apte à recevoir, avec le cylindre de chemisage, une cartouche de grand format. Une telle chambre d'infusion permet, certes, l'utilisation de deux types de cartouches, une petite contenant un produit de percolation et une plus grande contenant un produit soluble, mais à condition particulière que ces cartouches présentent un même diamètre extérieur de la paroi latérale de leur réceptacle, ainsi qu'un même diamètre de la collerette d'assise en partie frontale de la chambre d'infusion, donc des diamètres de référence communs à des doses de formats différents. De plus, cette construction fait appel à la présence d'une tige interne de maintien d'une cartouche de petit format.

On connaît par ailleurs le document EP 1 208 782 qui décrit un dispositif de percolation pour une machine à café fonctionnant avec des capsules pré conditionnées de formats différents. La machine comporte une chambre de percolation munie d'une tête de percolation montée à coulissement à travers une ouverture pratiquée en partie haute de la chambre. La tête de percolation présente à l'intérieur un évidemment en forme de cloche ayant des dimensions correspondant à celles d'une capsule de petit format. Lors de l'utilisation d'une capsule de grand format, le sommet de la capsule pousse la tête de percolation vers le haut. La position relative de la tête de percolation par rapport à la chambre est donc amenée à varier en fonction de la dimension de la cartouche. Un organe d'arrêt actionné par une came est prévu pour assurer le blocage en position de la tête de percolation en fonction de la taille de la capsule utilisée. Le désavantage d'un tel dispositif de percolation consiste en ce qu'il comporte de nombreux organes en mouvement et présente de ce fait une construction complexe. De surcroît, pour des problèmes d'étanchéité, le positionnement des capsules de différentes tailles à l'intérieur de la chambre doit se faire selon un même diamètre de l'épaulement pour toutes les capsules, ce qui limite de ce fait l'utilisation de la machine avec des capsules ayant une même dimension de l'assise ou de l'épaulement.

Le but de la présente invention est de remédier au moins en partie aux inconvénients précités et d'optimiser l'agencement d'une pluralité de doses de tailles différentes dans une tête d'injection de machine à café pour rendre cette machine aussi versatile que possible tout en réduisant son encombrement.

Un but supplémentaire de l'invention est une machine à café apte à fonctionner soit avec deux doses identiques, soit avec deux doses de tailles différentes simultanément.

Un autre but de l'invention est une machine à café apte à fonctionner avec des doses de tailles différentes, tout en permettant un agencement précis d'une dose par rapport au logement prévu à cet effet dans la tête d'infusion.

Un autre but de l'invention est une machine à café destinée au fonctionnement avec des doses de tailles différentes qui soit d'une construction simplifiée, facile à industrialiser et de manière économique, tout en étant d'utilisation aisée et fiable en fonctionnement.

Ces buts sont atteints avec une machine à café selon la revendication 1.

Par tête d'infusion on comprend généralement la partie de la machine où est réalisée l'infusion ou la partie qui, d'une part, supporte le produit à infuser ou de percolation, et d'autre part, assure l'arrivée de l'eau chaude sous pression en contact avec le produit à infuser ou de percolation.

Par surface d'assise d'une dose on comprend une surface, généralement plane, avec laquelle la dose prend appui sur une paroi formant support d'un logement prévu à cet effet à l'intérieur de la tête d'infusion. La surface d'assise borde généralement le réceptacle contenant le produit à infuser et a, de ce fait, une dimension périphérique supérieure à celle du réceptacle. Cette surface d'assise doit être suffisamment rigide et avoir des dimensions suffisamment importantes pour permettre le maintien en place d'une dose sans qu'une déformation de la dose ou un déplacement de cette dernière ne se produise sous la poussée d'un organe de perforation ou de l'eau d'infusion sous pression. Ceci surtout dans le cas où le point de perforation est décalé par rapport au plan de l'assise notamment au cas où la dose est logée avec son assise à l'intérieur de l'empreinte, le réceptacle contenant le produit à infuser étant orienté vers le haut en direction de l'organe d'injection.

Dans le cadre des doses de l'invention, cette surface d'assise est sous forme d'une collerette périphérique bordant un réceptacle cylindrique ou en tronc de cône en sa partie inférieure. Les dimensions de cette collerette peuvent être de l'ordre de 3 à 7 mm pour un diamètre extérieur d'environ 70 à 50 mm. Une telle dose est destinée au fonctionnement à basse pression, la pression d'injection pouvant être d'environ 0.5 à 1 bar.

Par diamètre d'assise d'une dose, on comprend le diamètre extérieur de sa surface d'assise, dans le cas où la surface d'assise a une forme circulaire; ou le diamètre du cercle dans lequel s'inscrit le contour extérieur, voire la majeure partie du contour extérieur d'une surface d'assise pour une dose de forme quelconque.

Par une même assise annulaire périphérique commune à plusieurs doses de diamètres d'assise différents, on comprend une paroi de forme annulaire de l'empreinte prévue pour recevoir au moins deux doses présentant des surfaces d'assise de diamètres d'assise ou extérieurs correspondants différents. On comprend plus particulièrement que des doses de tailles différentes peuvent être installées à l'intérieur de la surface annulaire périphérique de l'empreinte. Cette dernière présente donc des dimensions suffisamment importantes pour pouvoir recevoir des doses ayant des diamètres d'assise différents, ou de manière à ce que les diamètres d'assise de toutes les doses puissent s'inscrire à l'intérieur de ladite assise annulaire périphérique. Plusieurs doses de diamètres d'assise différents peuvent ainsi être supportées par une même paroi plane de l'empreinte, en étant positionnées à une même hauteur par rapport aux moyens d'injection et d'évacuation, ce qui simplifie de manière notable la construction d'une telle empreinte.

On aurait pu, certes, envisager une assise circulaire ou présentant un contour quelconque fermé, mais on préfère une forme annulaire, c'est à dire présentant une ouverture à l'intérieur de sa circonférence pour matérialiser ainsi un passage d'écoulement de la boisson infusée à travers l'empreinte du support des doses. Ainsi, la dimension extérieure (par exemple son diamètre) d'une telle assise périphérique correspond au diamètre extérieur maximum d'une dose de grand ou large format et la dimension intérieure (par exemple son diamètre) est légèrement supérieure au diamètre extérieur d'une dose de petit format, une pluralité de doses de diamètres d'assise intermédiaires, compris entre ledit diamètre maximum et ledit diamètre minimum, pouvant également être reçues à l'intérieur d'une telle empreinte et orientées par la paroi d'indexation verticale.

Par assise annulaire périphérique dont une partie du rebord extérieur forme paroi verticale d'indexation commune à plusieurs doses différentes, on comprend qu'une partie de la paroi verticale bordant à l'extérieur l'assise périphérique de l'empreinte présente une dimension de référence commune à au moins deux doses qui ont des dimensions d'assise différentes. Ainsi, ladite assise à une forme et des dimensions aptes à accueillir soit une dose de format large soit des doses de formats plus étroits, où les doses, larges ou étroites, sont inscrites à l'intérieur du contour périphérique de l'assise de l'empreinte, tout en s'orientant par rapport à la paroi verticale d'indexation, plane ou en arc de cercle, avec laquelle elles viennent en contact. Une telle dose, orientée par rapport à la paroi d'indexation, peut prendre une seule position possible, ce qui lui confère une assise sûre et stable, sans que l'utilisateur puisse se tromper de position lors de l'introduction des doses de formats différents dans ladite empreinte.

Par paroi verticale on comprend une paroi essentiellement perpendiculaire au plan d'une assise horizontale de l'empreinte, sans exclure la possibilité que cette paroi verticale ait un faible angle d'inclinaison ce qui faciliterait l'introduction d'une dose dans une empreinte alors évasée. Cette paroi verticale peut être une paroi bordant l'assise de l'empreinte ou une nervure située dans le plan de l'assise, perpendiculaire à ce dernier.

Ainsi, une même empreinte devient polyvalente, une dose pouvant être inscrite à l'intérieur de l'assise annulaire périphérique de l'empreinte et orientée par rapport à la paroi verticale, plusieurs doses de tailles différentes ayant ainsi un bon positionnement au sein de l'empreinte et également par rapport aux organes de perforation et d'injection présentes dans la tête d'infusion. Une telle machine à café peut être utilisée avec au moins deux doses de produit de dimensions différentes. Dans le cas d'une assise circulaire, une telle empreinte peut accueillir au moins deux doses de diamètres extérieurs différents au niveau de leur base ou collerette d'appui.

Avec une même empreinte on peut donc obtenir plusieurs types de boissons et/ou des quantités différentes de boissons. Par exemple, une dose de grand ou large format peut contenir un produit soluble, alors qu'une dose de format petit ou étroit peut contenir un produit d'infusion. Dans un autre cas, une dose de large format peut contenir une quantité plus importante d'un même produit à infuser qu'une dose de format étroit, celle-ci nécessitant également une quantité plus importante d'eau d'infusion. Dans ce cas, avec seulement deux doses de formats différents on peut varier la quantité de boisson obtenue.

Ainsi, en utilisant un support unique de réception de doses distinctes, on réduit l'encombrement de la tête d'infusion, tout en permettant de varier le type et les quantités de boissons préparées. Une telle solution présente une facilité de construction, une facilité d'utilisation et une solidité remarquable.

Dans un mode préféré de réalisation de l'invention, une dose est indexée par rapport à l'une des parois verticales latérales de ladite empreinte.

Par paroi latérale on comprend une paroi en bordure de l'empreinte dans la direction de son axe longitudinal. Dans une variante, on peut également envisager une paroi verticale transversale, c'est-à-dire en bordure de l'empreinte, mais dans une direction perpendiculaire à l'axe longitudinal. Cette paroi latérale commune à plusieurs doses de diamètres d'assise différents peut être une face plane ou en arc de cercle d'une paroi verticale d'extrémité de l'empreinte. Ainsi, les doses utilisées avec une telle empreinte présentent chacune une dimension dite de référence latérale commune, comparable à celle de la paroi d'indexation, dimension qui sert d'orientation lors de leur mise en place à l'intérieur de l'empreinte. On comprend que, dans cet agencement, les deux doses ne sont pas coaxiales, mais décalées latéralement pour prendre appui avec un côté sur la paroi d'indexation. Des butées pourraient être envisagées pour éviter les déplacements en translation dans la direction longitudinale opposée d'une dose de format étroit à l'intérieur de l'empreinte. Ceci assure le maintien en place des doses et leur bon positionnement par rapport aux organes de perforation et d'injection d'eau.

Dans un autre mode de réalisation de l'invention, une dose est indexée par rapport à au moins deux parois verticales en vis-à-vis de ladite empreinte.

Dans ce cas, les doses peuvent être disposées de manière coaxiale l'une par rapport à l'autre à l'intérieur de l'empreinte, ce qui fait qu'une deuxième dimension latérale commune opposée peut servir de butée. Cette dimension peut être transversale ou longitudinale ou une combinaison des deux. Si nécessaire, des butées peuvent également être prévues pour éviter un déplacement en rotation d'une dose de petit format par rapport à une empreinte plus grande et obtenir ainsi un positionnement stable d'une dose à l'intérieur d'une empreinte polyvalente. Les doses utilisées avec une telle empreinte polyvalente doivent également présenter au moins une référence transversale commune.

Quelques exemples peuvent être imaginés : à une dose de format étroit, appelée dose standard, de section transversale circulaire, on pourrait associer une dose de large format, ou appelée particulière, de section transversale elliptique ou circulaire, voire carrée ou en forme de tout autre polygone régulier, dans laquelle on peut inscrire la dose standard, à condition que la dimension transversale de cette dernière, par exemple la largeur, corresponde au diamètre de la dose standard. Dans un autre exemple, une dose standard de section carrée ou polygonale est associée à une dose particulière circulaire de diamètre correspondant à la dimension la plus grande de la dose standard. Dans d'autres exemples, une dose standard peut avoir une forme régulière ou une forme quelconque, mais ayant au moins une dimension en commun avec celle de la dose particulière, qui elle a une forme régulière ou une forme quelconque permettant à la première d'être inscrite dans la deuxième, tout en étant orientée selon sa dimension transversale ou latérale commune.

Avantageusement, ladite empreinte comporte au moins une nervure de guidage en direction longitudinale et/ou transversale desdites doses.

Ceci permet une indexation simple, par exemple en utilisant une paroi latérale, tout en bloquant effectivement tout déplacement possible d'une dose par rapport à l'empreinte. Lesdites nervures de guidage coopèrent de préférence avec la périphérie de l'assise d'une dose.

Utilement, ladite empreinte comporte une ouverture bordée par une paroi de centrage d'une dose de large format, la périphérie inférieure de ladite paroi étant raccordée à une assise périphérique horizontale dont le diamètre intérieur forme support pour une dose de format étroit, le bord circulaire interne de cette assise périphérique étant raccordé avec une zone collectrice en forme d'entonnoir orientée vers le bas.

Ceci permet de bien positionner chacune des doses dans son logement et d'orienter la boisson obtenue vers un récipient collecteur, tout en optimisant la construction. A titre d'exemple, un support comportant une telle empreinte peut être réalisé en une matière plastique par une technique d'injection.

Avantageusement, ladite empreinte est destinée à coopérer avec au moins deux aiguilles d'injection de hauteurs différentes.

Ainsi, chaque type de dose peut bénéficier d'une injection à une profondeur optimale en fonction du type de produit qu'elle contient. Ainsi, il est par exemple préférable d'injecter de l'eau uniquement en la partie supérieure d'une dose de café moulu, pour que l'eau ait le temps d'infuser la mouture en descendent vers la sortie de la dose, alors qu'il vaut mieux injecter de l'eau en partie basse d'une dose contenant un produit soluble afin d'optimiser le mélange de ce dernier avec l'eau injectée. De surcroît, en utilisant des aiguilles différentes connectées à des moyens d'alimentation en eau d'infusion commandés indépendamment, on peut également varier la quantité d'eau d'infusion envoyée dans une dose spécifique.

De préférence, lesdites aiguilles d'injection sont décalées radialement par rapport à l'axe de ladite empreinte, l'aiguille la plus longue étant la plus éloignée du centre.

Ceci permet d'éviter que l'aiguille la plus longue perfore inutilement une dose de petit format qui est, elle, déjà perforée par l'aiguille courte. Par ailleurs, l'aiguille la plus longue est plus particulièrement destinée à l'injection de l'eau en partie inférieure et périphérique d'une dose de produit soluble, généralement de plus grandes dimensions.
Avantageusement, ladite tête d'infusion comporte deux empreintes côte-à-côte dans un support commun.

Ceci permet de confectionner soit deux boissons identiques simultanément au cas où deux doses identiques seraient installées dans les deux empreintes, par exemple deux tasses de café ; soit une boisson combinée en utilisant deux doses différentes, par exemple une dose de lait et une dose de café pour obtenir du café au lait.

De préférence, lesdites deux empreintes comportent chacune une assise annulaire périphérique présentant au moins une paroi verticale d'indexation commune, les deux assises étant situées au même niveau.

Ainsi, on peut loger deux doses identiques à l'intérieur des empreintes, les deux assises étant situées au même niveau rendant possible leur utilisation avec deux organes d'injection identiques, situées à la même hauteur.

Avantageusement, lesdites deux empreintes présentent chacune une paroi verticale d'indexation, les deux parois étant situées de part et d'autre d'une cloison séparant lesdites empreintes.

Un tel agencement permet d'optimiser la construction et de réduire l'encombrement d'une tête d'infusion à deux empreintes.

Utilement, ledit support est monté amovible dans la tête d'infusion.

Un tel support amovible facilite l'extraction des doses en fin de cycle de préparation de boisson, les doses pouvant alors être évacuées à l'extérieur de la machine en vidant le support. De surcroît, un tel support est sujet aux salissures, en étant souvent en contact avec la boisson ; ainsi en le rendant amovible, on facilite sa nettoyabilité.

L'invention sera mieux comprise à l'étude des modes de réalisation pris à titre nullement limitatif et illustrés aux figures annexées dans lesquelles :
- la figure 1 est une vue générale en perspective d'une machine à café selon l'invention, en sa position ouverte ;
- la figure 2a est une vue en coupe axiale verticale d'un support des doses, avec deux doses représentées côte-à-côte ;
- la figure 2b est une vue en coupe transversale, avec un plan passant par l'assise des doses, d'un support des doses, avec deux doses représentées côte-à-côte ;
- les figures 3a et 3b représentent une vue de dessus et une vue en coupe axiale d'une dose de petit format ;
- les figures 4a et 4b représentent une vue de dessus et une vue en coupe axiale d'une dose de grand format ;
- la figure 5 illustre de manière schématique différentes combinaisons de formes de sections des doses selon une variante de l'invention.

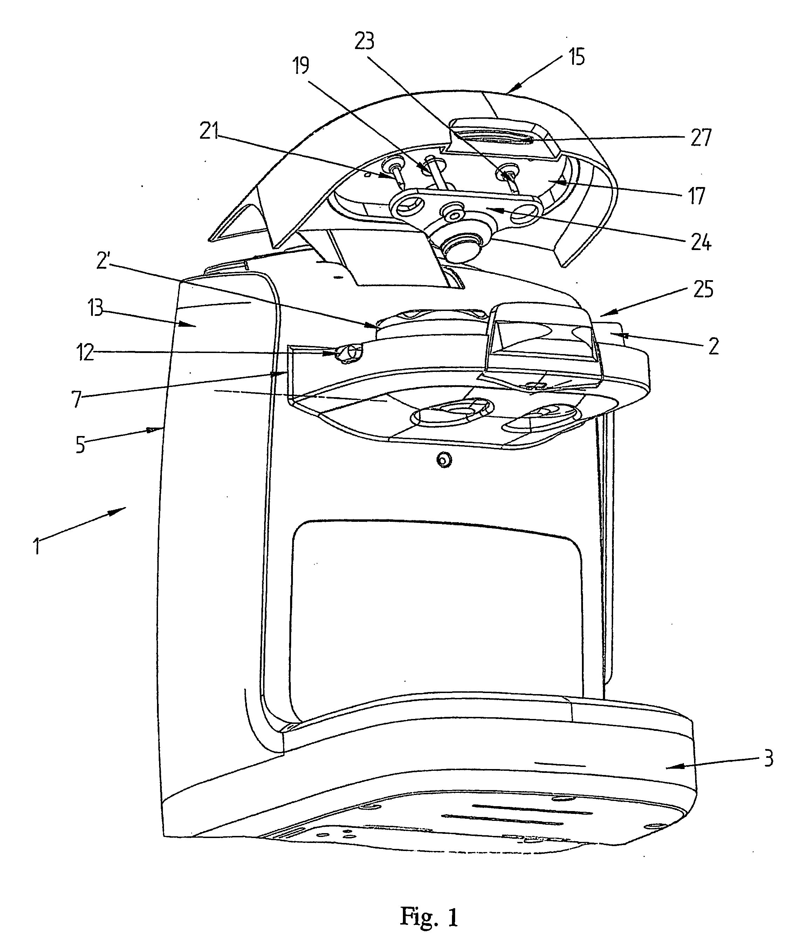

Comme illustré sur la figure 1, le bâti 1 de la machine à café comprend une base 3 horizontale inférieure complétée d'un montant vertical arrière 5. Un plateau horizontal 7 est fixé à partir du montant arrière à une hauteur permettant le positionnement sous-jacent d'un récipient, tel que tasse, gobelet ou verseuse. La face supérieure de l'extrémité frontale du plateau 7 présente un logement creux dans lequel est installé un support 11 amovible pour deux doses 2, 2' côte-à-côte.

L'extrémité antérieure du plateau 7 est complétée par deux montants latéraux 13 supportant en rotation une mâchoire 15 dont l'extrémité frontale comporte une traverse constituant une base de montage 17 pour une pluralité d'aiguilles 19, 21 et 23 orientées vers le bas en direction des doses.

Les aiguilles 19, 21, 23 sont montées par l'intermédiaire d'une platine porte-aiguilles à la base de montage 17, leurs extrémités traversant des ouvertures pratiquées dans une plaque de maintien 24 qui prend appui sur la partie supérieure des doses 2, 2'. Les aiguilles 19, 21, 23 sont creuses et présentent, à l'une de leurs extrémités supportée par la base de montage 17, un embout de raccord à un conduit d'alimentation en eau d'infusion, alors que l'extrémité opposée présente une pointe conique, une ouverture d'injection d'eau dans la dose étant pratiquée peu au-dessus de ladite pointe conique.

Ainsi, on remarque une aiguille 19 plus longue venant en correspondance avec une empreinte 29 d'une dose 2' de large format ou dose dite particulière, alors que les aiguilles 21, 23 plus courtes sont prévues pour venir en correspondance avec chacune des empreintes 29, 31 aptes à recevoir une dose 2 de format étroit ou dose dite standard. Les aiguilles 19, 21, 23 sont agencées dans un même plan médian vertical du support 11, les aiguilles 21 et 23 étant positionnées au centre des empreintes 29 et 31, alors que l'aiguille 19 plus longue est décalée vers la périphérie de l'empreinte 29. Les aiguilles 21, 23 pénètrent sur une faible profondeur au centre d'une dose 2 standard contenant par exemple du café moulu ou un autre produit d'infusion et y injectent de l'eau chaude sous pression, eau qui parcourt en descendant tout le volume de la dose. L'aiguille 19 est insérée plus profondément à l'intérieur d'une dose 2' particulière de produit soluble, près de la périphérie de cette dernière de manière à ce que le jet d'eau sous pression envoyé tangentiellement à la paroi interne de la dose crée un tourbillon qui brasse bien le mélange.

Par ailleurs, un dispositif de verrouillage 25 de la mâchoire 15 en position abaissée comprend un crochet monté en rotation en l'extrémité frontale du plateau 7 et venant s'accrocher dans un cran 27 en correspondance ménagé en l'extrémité de la mâchoire 15.

Dans le cadre de l'invention, une dose 2, 2' se présente sous la forme d'un réceptacle en forme de coupelle inversée. La face inférieure de ce réceptacle peut être plane ou peut présenter un fond en forme d'un entonnoir, une collerette radiale étant prévue sur le pourtour du réceptacle au niveau de sa face inférieure.

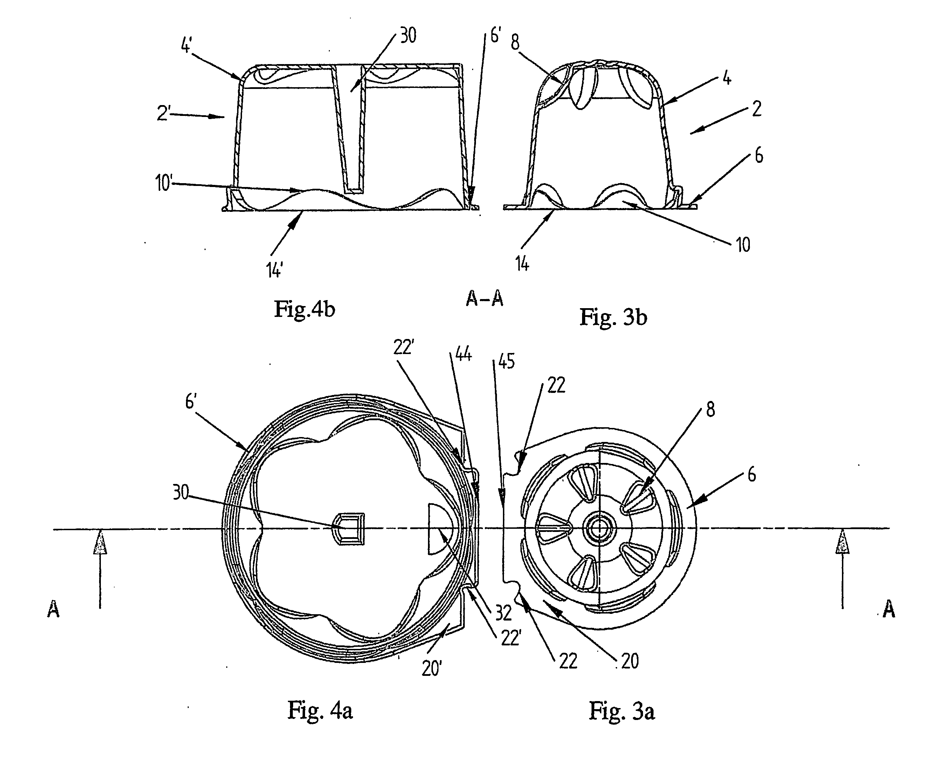

Tel que visible aux figures 3a et 3b, une dose 2 standard comprend une enveloppe 4 thermoformée formant paroi latérale et supérieure, prolongée en partie inférieure par une collerette radiale 6 sur son pourtour. La paroi latérale a une forme de tronc de cône présentant, en partie supérieure plusieurs échancrures 8 de rigidification. Une zone de perçage, en forme de dôme renversé peu profonde, est prévue au centre de la partie supérieure de la dose 2 afin de faciliter l'orientation d'une aiguille d'injection en vue de la perforation de l'enveloppe 4. En partie inférieure, la dose 2 standard présente plusieurs nervures sinusoïdales 10 conférant une certaine raideur à la base de la paroi latérale, avoisinant la collerette radiale 6. Un tamis ou filtre 14 est collé ou soudé sur la face inférieure de la collerette radiale 6 en ménageant ainsi, avec l'enveloppe 4 un volume de réception d'un produit à infuser, tel que du café moulu. Un tel produit occupe la majeure partie du volume, le reste étant destiné à la réception de l'eau d'infusion.

Dans un mode préféré de réalisation de l'invention, une dose 2 standard est réalisée en une feuille de matière plastique alimentaire, par exemple du type polypropylène ou polyéthylène ayant une épaisseur d'environ 1,3 mm. Le diamètre de la base de la dose est d'environ 40 mm, la paroi latérale présentant un angle d'inclinaison d'environ 7° par rapport à la verticale. Le diamètre de la collerette radiale 6 est d'environ 50 mm, ce qui détermine une bordure radiale d'environ 5 mm sur le pourtour. La hauteur d'une dose 2 est d'environ 36 mm. Le filtre 14 peut être en papier, du type non tissé micro perforé.

Afin de garder le produit à infuser à l'abri du contact de l'air qui pourrait provoquer une oxydation prématurée de ce produit, un opercule réalisant l'étanchéité, fait en une matière plastique ou en aluminium, est également collé sur la face inférieure de la collerette 6, à l'extérieur du filtre 14. Cet opercule d'étanchéité sera déchiré par l'utilisateur avant l'introduction de la dose 2 dans le support prévu à cet effet dans la machine, une languette de préhension pouvant être prévue à cet effet.

Tel que mieux visible à la figure 3a, la collerette radiale 6 est prolongée sur un côté par une bordure 20 allongée se terminant par une bordure latérale 45 rectiligne. Deux encoches 22 sont délimitées sur la bordure 20, de part et d'autre de son axe de symétrie. Les encoches 22 ont le rôle de bien positionner la dose 2 dans son support prévu à cet effet dans la machine, tel qu'il sera expliqué par la suite.

Une dose 2' particulière est représentée aux figures 4a et 4b. Cette dose présente généralement les mêmes parties constitutives que la dose 2 standard, représentée en figures 3a et 3b, et portant les mêmes numéros de référence suivis du signé ""'. Ainsi, la dose 2' particulière comporte une enveloppe 4' thermoformée formant paroi latérale et supérieure, prolongée, en partie inférieure, par une collerette radiale 6' sur son pourtour. La paroi latérale peut avoir une forme cylindrique présentant, en partie inférieure, plusieurs nervures sinusoïdales 10' conférant raideur à la base de la paroi latérale, avoisinant la collerette radiale 6'. Un tamis ou filtre 14' est collé ou soudé sur la face inférieure de la collerette radiale 6' en ménageant ainsi, avec l'enveloppe 4' un volume de réception d'un produit à dissoudre, tel le lait en poudre, le café lyophilisé, le mélange des deux, le chocolat en poudre, etc. Dans ce cas, comme dans celui de la dose 2 standard, un opercule d'étanchéité est également collé sur la face inférieure de la collerette 6', à l'extérieur du filtre 14', cet opercule, prévu d'une languette de préhension, étant également déchiré par l'utilisateur avant l'introduction de la dose 2' dans le support prévu à cet effet dans la machine.

Tel que prévu pour la dose 2 standard et tel que mieux visible à la figure 4a, la collerette radiale 6' de la dose 2' particulière est également prolongée sur un côté par une bordure 20' se terminant par une bordure latérale 44 rectiligne et comportant deux encoches 22' taillées de part et d'autre de son axe de symétrie pour mieux orienter la dose 2' dans son support prévu à cet effet dans la machine.

Dans un mode préféré de réalisation de l'invention, une dose 2' particulière est réalisée en une feuille de matière plastique alimentaire, par exemple du type polypropylène ou du polyéthylène ayant une épaisseur d'environ 1,3 mm. Le diamètre de la partie cylindrique de l'enveloppe 4' est d'environ 58 mm, le diamètre de la collerette radiale 6 est d'environ 66 mm, ce qui détermine une bordure radiale d'environ 4 mm sur le pourtour. Une telle dose 2' a, de préférence, la même hauteur qu'une dose 2 standard, par exemple de 36 mm.

Au centre de la face supérieure de la dose 2', l'enveloppe 4' forme un puits 30 permettant à l'aiguille d'injection courte 21 de descendre sans perforer la dose 2'. Sur la même face supérieure, mais cette fois, décalée vers la périphérie, l'enveloppe 4' forme une creusure 32 de guidage de l'aiguille plus longue 19 qui descend à l'intérieur de la dose 2'.

Par ailleurs, le support 11 pour les doses 2, 2' est monté amovible dans le logement creux du plateau 7 et il comporte dans ce but deux poignées de préhension 12 qui viennent s'installer dans des creusures correspondantes pratiquées dans ledit logement du plateau 7. Les poignées de préhension 12 font saillie latéralement afin de faciliter la saisie du support 11 par l'utilisateur de la machine.

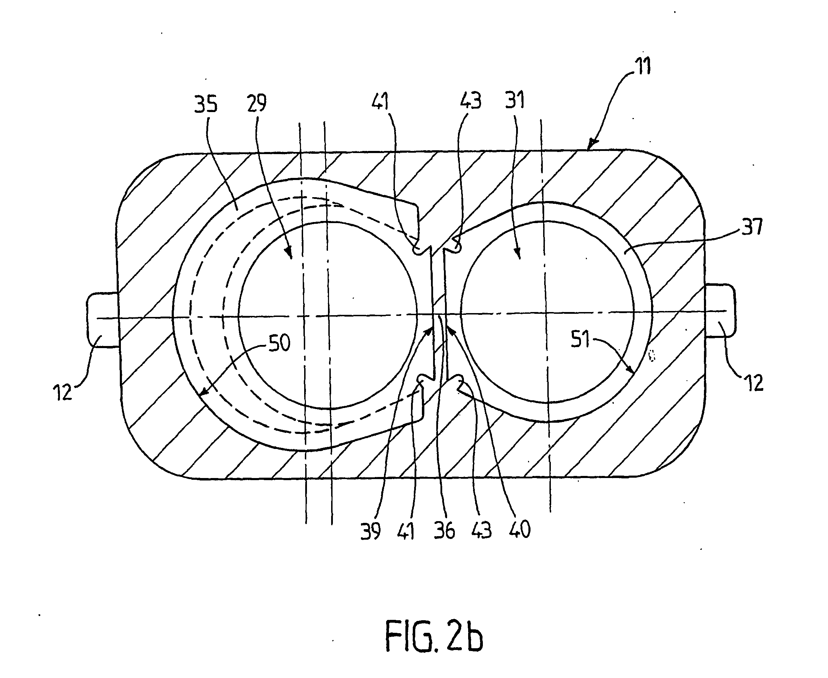

Selon l'invention, le support 11 forme deux empreintes 29 et 31 verticales traversantes de réception et de maintien des doses 2 et 2' de produit. Tel que mieux visible à la figure 2b, le support 11 des doses a une forme oblongue, permettant l'agencement de deux doses côte-à-côte dans deux empreintes 29 et 31 le long d'un même axe longitudinal, les deux empreintes étant séparées par une cloison 36 centrale.

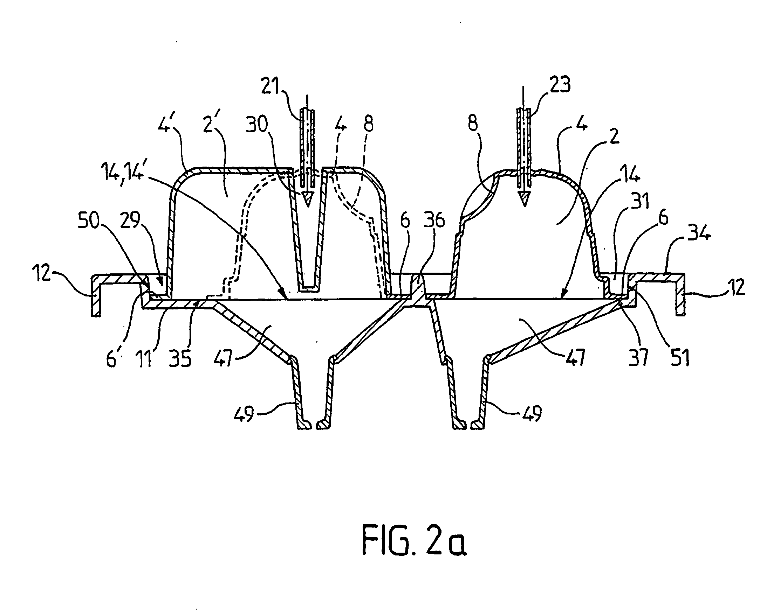

En figure 2a on a représenté deux doses 2' et 2 côte-à-côte dans un support 11 commun, une dose 2 étant représentée en pointillé superposée sur la dose 2' afin de faciliter la compréhension d'une variante utilisant deux doses identiques 2 côte-à-côte. Ainsi, on remarque que la collerette 6 d'une dose 2 standard prend appui sur une assise annulaire périphérique 37 de l'empreinte 31 en étant insérée avec sa bordure latérale 45 vers la cloison 36, alors que la collerette 6' d'une dose 2' particulière prend appui sur une assise annulaire périphérique 35 de l'empreinte 29, avec sa bordure latérale 44 orientée également vers la cloison 36.

Plus particulièrement selon l'invention, l'empreinte 29 comporte une assise annulaire périphérique 35 de diamètre extérieur correspondant à celui de la collerette 6' de la dose 2' particulière et, du côté de la cloison 36, une paroi verticale latérale 39 d'indexation des doses. Le diamètre intérieur de l'assise annulaire périphérique 35 a une dimension inférieure à celle de la collerette 6 d'une dose 2 formant ainsi support pour une dose 2 et également pour une dose 2' (fig. 2a) placées dans l'empreinte en vue de l'infusion. Les deux doses 2, 2' présentent chacune une bordure latérale 44, respectivement 45 qui vient en regard de la paroi verticale latérale 40 de la cloison 36.

Tel que mieux visible à la figure 2a, l'empreinte 29 comporte une ouverture bordée par une paroi de centrage 50 de la dose 2' particulière, la paroi de centrage 50 ayant un diamètre intérieur égal ou légèrement supérieur au diamètre extérieur de la collerette 6' de la dose 2'. La périphérie inférieure de cette paroi est raccordée à une assise annulaire périphérique 35. Le bord circulaire interne de cette assise est raccordé avec une zone collectrice 47 en forme d'entonnoir orientée vers le bas et pourvue d'une ouverture de sortie de la boisson à l'extrémité d'un cône de sortie 49 orienté également vers le bas.

L'empreinte 31 voisine comporte quant à elle, une assise annulaire périphérique 37 de diamètre extérieur correspondant à celui de la collerette 6 d'une dose 2 standard et, du côté de la cloison 36, une paroi verticale latérale 40 d'indexation d'une dose 2 standard. L'assise annulaire périphérique inférieure 37 se trouve au même niveau en hauteur que l'assise annulaire périphérique 35 de l'empreinte 29 voisine, ce qui fait que les deux doses 2 et 2' différentes ou deux doses 2 identiques agencées côte-à-côte, l'une dans l'empreinte 29 et l'autre dans l'empreinte 31 se trouvent au même niveau. Du fait que les deux doses côte-à-côte se trouvent au même niveau, l'agencement et le positionnement des organes de perforation et d'injection d'eau se trouve facilité, ainsi que celui de la plaque de maintien 24. Comme dans le cas précédent, l'empreinte 31 comporte une ouverture bordée d'une paroi de centrage 51 de la collerette 6 d'une dose 2 standard. Cette paroi de centrage 51 peut être, comme la précédente, verticale ou oblique. La périphérie inférieure de cette paroi est raccordée à une assise annulaire périphérique 37 prévue pour supporter la collerette 6 de la dose 2 standard. Le bord circulaire interne de cette assise périphérique inférieure 37 est lui aussi raccordé avec une zone collectrice 47 en forme d'entonnoir orientée vers le bas et pourvue d'une ouverture de sortie de la boisson à l'extrémité d'un cône de sortie 49 orienté également vers le bas.

Dans une variante, l'empreinte 31 peut comporter, comme la précédente, une assise annulaire périphérique 37 apte à recevoir deux doses 2,2' de formats différents.

La surface latérale de chaque empreinte est légèrement évasée vers le haut, de l'ordre de 5 à 10% afin de faciliter la mise en place des doses 2, 2' dans leur empreinte 29,31 respective à l'intérieur du support 11, avec la collerette orientée vers le bas.

Sur la face frontale de chacune des assises annulaires périphériques 35 et 37, du côté de la cloison 36, se dressent vers le haut deux nervures 41, respectivement 43 agencées obliquement, de part et d'autre de l'axe longitudinal du support 11, permettant ainsi une bonne orientation, en queue d'aronde, des doses 2, 2' et leur maintien en position rapprochée de la cloison 36. Chaque nervure 41, 43 s'étend en hauteur entre la surface d'une assise annulaire périphérique 35,37 et la face supérieure 34 du support 11. En les introduisant à l'intérieur des empreintes, les doses sont insérées avec leurs encoches 22, respectivement 22' sur les nervures 41, respectivement 43. Ceci assure un positionnement correct des doses 2,2' par rapport au support 11, respectivement par rapport à la position des aiguilles d'injection 19, 21, 23, tout en empêchant un déplacement longitudinal des doses 2,2'.

En fonctionnement, l'utilisateur commence par mettre une dose 2 standard dans l'empreinte 31 et une dose 2' particulière dans l'empreinte 31, s'il désire confectionner du café au lait, ou deux doses 2 identiques dans chacune des empreintes 29, 31 au cas où il veut confectionner deux cafés noirs en même temps. Une fois les doses installées dans leurs logements respectifs, l'utilisateur abaisse la mâchoire 15 jusqu'à ce que le crochet du dispositif de verrouillage 25 s'engage dans un cran 27 en extrémité de la mâchoire 15. En même temps que la descente de la mâchoire 15 vers sa position verrouillée, les aiguilles 19, 21, 23 perforent les doses 2, 2' et prennent place à l'intérieur de ces dernières.

En cette position la mâchoire 15 est verrouillée et la machine à café est prête à effectuer un cycle d'infusion. L'utilisateur met la cafetière sous tension en agissant sur un bouton de commande marche/arrêt. L'élément chauffant est alors alimenté et la chaudière de la cafetière s'échauffe rapidement. Quand le thermostat de réglage de l'élément chauffant déclenche, l'eau d'infusion, venant d'un réservoir d'eau froide supporté par le bâti 1 en étant envoyée par une pompe du même bâti à travers la chaudière, arrive à l'intérieur des doses 2, respectivement 2'. L'eau d'infusion est alors injectée à l'intérieur des doses 2, 2' par deux des aiguilles d'infusion 19, 21, 23. La boisson infusée s'écoule ensuite via les cônes de sortie 49 dans un ou deux récipient(s) situé(s) en correspondance avec les cônes de sortie 49.

Une fois le cycle d'infusion terminé, l'utilisateur déverrouille la mâchoire 15 qui s'ouvre en étant poussée par un ressort de rappel. L'utilisateur peut ainsi accéder au support 11 qu'il retire en le prenant par les poignées 12 pour le vider à l'extérieur de la machine. Une fois ce support 11 remis en place dans le logement 9 du plateau horizontal 7, un autre cycle de réalisation d'une ou plusieurs boissons peut recommencer.

D'autres variantes de réalisation de l'invention peuvent être envisagées sans sortir du cadre de ses revendications.

Ainsi, on peut envisager un support comportant deux empreintes identiques, chacune permettant l'utilisation avec un même nombre de doses de tailles différentes. Chaque empreinte pourrait comporter plusieurs surfaces d'assise pour la base des doses, plus le nombre d'assises est important, plus il y a de possibilités d'utilisation avec un nombre important de doses de formats différents. De telles empreintes permettent l'utilisation avec tout type de dose, sans tenir compte de sa forme extérieure ou de la valeur de son diamètre, à condition que cette dose présente une surface plane d'assise destinée à prendre appui sur la surface d'assise d'une empreinte et au moins une dimension d'indexation par rapport à l'empreinte.

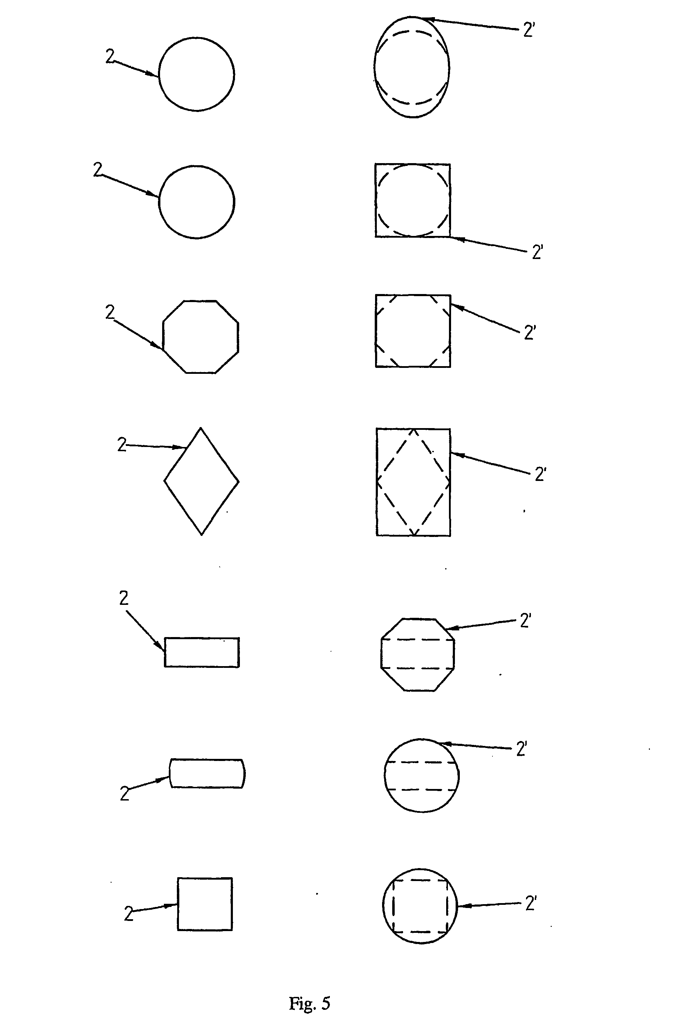

La figure 5 illustre, de manière schématique, quelques combinaisons possibles selon quelques variantes de l'invention. Les figures 2a et 2b illustrent différentes combinaisons possibles de sections entre la dose standard 2 (représentée en trait plein en partie gauche de la figure 5 et en pointillé en partie droite de la même figure) et la dose particulière 2' (représentée en trait plein en partie gauche de la figure 5). On comprend, dans ces variantes, que le contour de l'assise périphérique de l'empreinte polyvalente supportant les doses correspond au contour de l'assise de la dose plus grande ou dose particulière 2'. Ainsi, par exemple, la dose standard 2 ayant une assise de section circulaire peut être associée à une dose particulière (on comprend inscrite à l'intérieur de cette dernière) ayant une assise de section elliptique, ou carrée, voire section circulaire insérée dans une section triangulaire, ou octogonale ou tout autre polygone régulier où la largeur de l'assise de la dose 2' est égale au diamètre de l'assise de la dose 2 ; ou une dose standard 2 de section octogonale peut être associée à une dose particulière 2' de section carrée ayant une assise de même largeur ; ou une dose standard 2 de section en losange peut être associée à une dose particulière 2' rectangulaire ayant une assise de même largeur et longueur que celle de la dose standard ; ou une dose standard 2 de section rectangulaire de l'assise et ayant une largeur prédéterminée est associée à une dose particulière 2' de forme octogonale ayant une assise de même largeur que la première ; ou une dose en forme de secteur de cercle de diamètre préétabli est associée à une dose particulière 2' circulaire de même diamètre que la précédente ; ou encore une dose standard de forme carrée de diagonale donnée est associée à une dose particulière 2' circulaire de diamètre égal à la diagonale de la dose standard 2 ; ou une dose standard ayant une forme de polygone régulier inscrit dans un cercle représentant la dose particulière 2', le diamètre de ce cercle étant égal à la dimension la plus grande de la dose standard ; ou enfin, une dose standard ayant une forme régulière ou une forme quelconque, mais ayant au moins une dimension de même ordre de grandeur que la dose particulière (ayant une forme régulière ou une forme quelconque) qui permet à la première d'être inscrite dans la deuxième.

## Revendications

1. Machine à café apte à fonctionner avec des doses, comprenant des moyens d'alimentation en eau chaude d'une tête d'infusion apte à recevoir au moins deux doses de tailles différentes (2,2') comportant chacune au moins une collerette périphérique d'assise, des moyens de mise en communication desdits moyens d'alimentation avec le produit contenu à l'intérieur des doses afin d'obtenir une boisson, ainsi que des moyens permettant d'orienter ladite boisson sortant de la dose vers un récipient collecteur de boisson, où ladite tête d'infusion comporte un support (11) ayant au moins une empreinte (29) formant logement pour au moins deux doses de tailles différentes (2,2'), **caractérisée en ce que** ladite empreinte (29) comporte une même assise annulaire périphérique (35) prévue pour recevoir au moins deux doses présentant des collerettes d'assise de diamètres différents, une ou plusieurs parties du rebord extérieur de ladite assise périphérique (35) d'empreinte formant paroi verticale d'indexation commune auxdites doses (2,2').

2. Machine à café selon la revendication 1, **caractérisée en ce qu'**une dose est indexée par rapport à l'une des parois verticales latérales (39) de ladite empreinte.

3. Machine à café selon la revendication 1, **caractérisée en ce qu'**une dose est indexée par rapport à au moins deux parois, verticales en vis-à-vis de ladite empreinte.

4. Machine à café selon l'une des revendications 1 à 3, **caractérisée en ce que** ladite empreinte (29) comporte au moins une nervure (41) de guidage en direction longitudinale et/ou transversale desdites doses (2,2').

5. Machine à café selon l'une des revendications précédentes, **caractérisée en ce que** ladite empreinte comporte une ouverture bordée par une paroi de centrage (50) d'une dose (2') de large format, la périphérie inférieure de ladite paroi étant raccordée à une assise périphérique (35) horizontale dont le diamètre intérieur forme support pour une dose (2) de format étroit, le bord circulaire interne de cette assise périphérique (35) étant raccordé avec une zone collectrice (47) en forme d'entonnoir orientée vers le bas.

6. Machine à café selon l'une des revendications précédentes, **caractérisée en ce que** ladite empreinte (29) est destinée à coopérer avec au moins deux aiguilles d'injection (19,21) de hauteurs différentes.

7. Machine à café selon la revendication 6. **caractérisée en ce que** lesdites aiguilles d'injection (19,21) sont décalées radialement pair rapport à l'axe de ladite empreinte (29), l'aiguille la plus longue (19) étant la plus éloignée du centre.

8. Machine à café selon l'une des revendications précédentes, **caractérisée en ce que** ladite tête d'infusion comporte deux empreintes (29,31) côte-à-côte dans un support (11) commun.

9. Machine à café selon la revendication 8, **caractérisée en ce que** lesdites deux empreintes (29,31) comportent chacune une assise annulaire périphérique (35,37) présentant au moins une paroi verticale d'indexation commune, les deux assises étant situées au même niveau.

10. Machine à café selon la revendication 9 **caractérisée en ce que** lesdites deux empreintes (29,31) présentent chacune une paroi verticale latérale (39,40) d'indexation, les deux parois étant situées de part et d'autre d'une cloison (36) séparant lesdites empreintes (29,31),

11. Machine à café selon l'une des revendications précédentes, **caractérisée en ce que** ledit support (11) est monté amovible dans la tête d'infusion.

## Patentansprüche

1. Kaffeemaschine, die mit Kapseln funktionieren kann, mit Mitteln zur Versorgung eines Aufgusskopfes mit warmen Wasser, welcher mindestens zwei Kapseln (2, 2') unterschiedlicher Größe aufnehmen kann, die jeweils mindestens einen umlaufenden Auflagekragen aufweisen, mit Mitteln, die die Versorgungsmittel mit dem in den Kapseln enthaltenen Produkt in Verbindung bringen, um ein Getränk zu erhalten, sowie mit Mitteln, die es ermöglichen, das aus der Kapsel austretende Getränk zu einem Getränkeauffangbehälter zu leiten, wobei der Aufgusskopf einen Träger (11) mit mindestens einer Vertiefung (29) aufweist, welche eine Aufnahme für mindestens zwei Kapseln (2, 2') unterschiedlicher Größe bildet, **dadurch gekennzeichnet, dass** die Vertiefung (29) eine einzige ringförmige Umfangsauflage (35) aufweist, die dazu vorgesehen ist, mindestens zwei Kapseln mit Auflagekragen mit unterschiedlichem Durchmesser aufzunehmen, wobei ein oder mehrere Teile des Außenrandes der Umfangsauflage (35) der Vertiefung eine beiden Kapseln (2, 2') zugeordnete, vertikale Positionierwand bildet.

2. Kaffeemaschine nach Anspruch 1, **dadurch gekennzeichnet, dass** eine Kapsel in Bezug auf eine der vertikalen Seitenwände (39) der Vertiefung positioniert ist.

3. Kaffeemaschine nach Anspruch 1, **dadurch gekennzeichnet, dass** eine Kapsel in Bezug auf mindestens zwei vertikale, gegenüberliegende Wände der Vertiefung positioniert ist.

4. Kaffeemaschine nach einem der Ansprüche 1 bis 3, **dadurch gekennzeichnet, dass** die Vertiefung (29) mindestens eine Rippe (41) zur Führung der Kapseln (2, 2') in Längsrichtung und/oder Querrichtung aufweist.

5. Kaffeemaschine nach einem der vorhergehenden Ansprüche, **dadurch gekennzeichnet, dass** die Vertiefung eine Öffnung aufweist, die mit einer Wand (50) zum Zentrieren einer Kapsel (2') breiten Formats umrandet ist, wobei der untere Umfang der Wand mit einer horizontalen Umfangsauflage (35) verbunden ist, deren Innendurchmesser einen Träger für eine Kapsel (2) schmalen Formats bildet, wobei der kreisförmige Innenrand dieser Umfangsauflage (35) mit einem trichterförmigen, nach unten gerichteten Auffangbereich (47) verbunden ist.

6. Kaffeemaschine nach einem der vorhergehenden Ansprüche, **dadurch gekennzeichnet, dass** die Vertiefung (29) dazu vorgesehen ist, mit mindestens zwei Einspritznadeln (19, 21) unterschiedlicher Höhe zusammenzuwirken.

7. Kaffeemaschine nach Anspruch 6, **dadurch gekennzeichnet, dass** die Einspritznadeln (19, 21) bezüglich der Achse der Vertiefung (29) radial versetzt sind, wobei die längste Nadel (19) den größten Abstand zur Mitte aufweist.

8. Kaffeemaschine nach einem der vorhergehenden Ansprüche, **dadurch gekennzeichnet, dass** der Aufgusskopf zwei nebeneinanderliegende Vertiefungen (29, 31) in einem gemeinsamen Träger (11) aufweist.

9. Kaffeemaschine nach Anspruch 8, **dadurch gekennzeichnet, dass** die beiden Vertiefungen (29, 31) jeweils eine ringförmige Umfangsauflage (35, 37) mit mindestens einer vertikalen Wand zur gemeinsamen Positionierung aufweisen, wobei die beiden Auflagen auf der gleichen Ebene angeordnet sind.

10. Kaffeemaschine nach Anspruch 9, **dadurch gekennzeichnet, dass** die beiden Vertiefungen (29, 31) jeweils eine vertikale, seitliche Positionierwand (39, 40) aufweisen, wobei die beiden Wände auf der einen und auf der anderen Seite einer Trennwand (36) angeordnet sind, welche die Vertiefungen (29, 31) voneinander trennt.

11. Kaffeemaschine nach einem der vorhergehenden Ansprüche, **dadurch gekennzeichnet, dass** der Träger (11) abnehmbar im Aufgusskopf angebracht ist.

## Claims

1. A coffee machine suitable for operating with pre-packed portions, said coffee machine comprises: feed means for feeding hot water to a brewing head suitable for receiving at least two pre-packed portions of different sizes (2, 2'), each of which is provided with at least one peripheral bearing surface collar; means for putting said feed means into communication with the substance inside each of the pre-packed portions in order to obtain a beverage; and means making it possible to direct said beverage as it leaves the pre-packed portion towards a beverage collector receptacle; in which coffee machine said brewing head comprises a support (11) having at least one cavity (29) forming a recess for receiving at least two pre-packed portions of different sizes (2, 2'), said coffee machine being **characterized in that** said cavity (29) has a common peripheral annular bearing surface (35) designed to receive at least two pre-packed portions having bearing surface collars of different diameters, one or more segments of the outside rim of said peripheral bearing surface (35) of a cavity forming an indexing vertical wall that is common to said pre-packed portions (2, 2').

2. A coffee machine according to claim 1, **characterized in that** a pre-packed portion is indexed relative to one of the vertical side walls (39) of said cavity:

3. A coffee machine according to claim 1, **characterized in that** a pre-packed portion is indexed relative to at least two facing vertical walls of said cavity.

4. A coffee machine according to any one of claims 1 to 3, **characterized in that** said cavity (29) is provided with at least one rib (41) for guiding said pre-packed portions (2, 2') in the longitudinal direction and/or transverse direction.

5. A coffee machine according to any preceding claim, **characterized in that** said cavity comprises an opening edged by a centering wall (50) for centering a large-format pre-packed portion (2'), the bottom periphery of said wall being connected to a horizontal peripheral bearing surface (35) whose inside diameter forms a support for a pre-packed portion (2) of narrow format, the inside circular edge of said peripheral bearing surface (35) being connected to a funnel-shaped collector zone (47) extending downwards.

6. A coffee machine according to any preceding claim, **characterized in that** said cavity (29) is designed to co-operate with at least two injection needles (19, 21) of different lengths.

7. A coffee machine according to claim 6, **characterized in that** said injection needles (19, 21) are offset radially relative to the axis of said cavity (29), the longer needle (19) being the furthest away from the center.

8. A coffee machine according to any preceding claim, **characterized in that** said brewing head is provided with two cavities (29, 31) side-by-side in a common support (11).

9. A coffee machine according to claim 8, **characterized in that** each of said two cavities (29, 31) has a peripheral annular bearing surface (35, 37) having at least one common indexing vertical wall, the two bearing surfaces being situated at the same level.

10. A coffee machine according to claim 9, **characterized in that** each of said two cavities (29, 31) has an indexing vertical side wall (39, 40), the two walls being situated on either side of a partition (36) separating said cavities (29, 31).

11. A coffee machine according to any preceding claim, **characterized in that** said support (11) is removably mounted in the brewing head.
